# EUROPEAN PATENT APPLICATION

(11) **EP 4 693 585 A1**
(43) Date of publication of application: **11.02.2026**
(21) Application number: 24779328.4
(22) Date of filing: 11.03.2024
(51) Int. Cl.: H01M 10/0587, H01M 10/052, H01M 50/531

(54) **CYLINDRICAL BATTERY**

(30) Priority: 28.03.2023 JP 2023051832
(71) Applicant: Panasonic Energy Co., Ltd., Osaka 570-8511 (JP)
(72) Inventor: MATSUMOTO, Katsumasa, Kadoma-shi, Osaka 571-0057 (JP); ISHIGURO, Tasuku, Kadoma-shi, Osaka 571-0057 (JP); SASA, Tatsuro, Kadoma-shi, Osaka 571-0057 (JP); TAKAI, Yasuyuki, Kadoma-shi, Osaka 571-0057 (JP); HASHIMOTO, Tetsu, Kadoma-shi, Osaka 571-0057 (JP); KITAHAMA, Shinya, Kadoma-shi, Osaka 571-0057 (JP)
(74) Representative: Novagraaf International SA
(86) International application number: PCT/JP2024/009250
(87) International publication number: WO 2024/203197

(57) **Abstract**

This cylindrical battery, which is an example of an embodiment of the present invention, is provided with an electrode body (14) which has a positive electrode (11), a negative electrode (12), and a separator (13), and in which the positive electrode (11) and the negative electrode (12) are wound with the separator (13) therebetween. The negative electrode (12) includes an opposing portion (50) and a non-opposing portion (51). The non-opposing portion (51) includes a first region (52), in which a negative-electrode mixture layer (41) is formed on both surfaces of a negative-electrode core body (40) and which is wound at least 0.75 times from the starting end (50x) of the opposing portion (50). The first region (52) includes a thin section (54) in which the thickness of the negative-electrode mixture layer (41) is thinner than the thickness of the negative electrode mixture layer (41) in the opposing section (50).

## Description

### TECHNICAL FIELD

The present disclosure relates to a cylindrical battery.

### BACKGROUND ART

A cylindrical battery comprises a wound electrode assembly formed by spirally winding a positive electrode and a negative electrode with a separator interposed therebetween. A winding core of the electrode assembly typically has formed therein a cavity extending in the axial direction. Such a cavity functions as an exhaust passage for guiding a gas, which is generated when an abnormality occurs to the battery, toward a safety valve. For example, Patent Literature 1 discloses a cylindrical battery comprising a wound electrode assembly having, on the winding-start side of the electrode assembly, a non-opposing portion that has a negative electrode mixture layer formed on at least one surface of a negative electrode core, and is wound by a predetermined length or more without facing a positive electrode.

### CITATION LIST

### PATENT LITERATURE

PATENT LITERATURE 1: International Publication No. WO 2018/116876

### SUMMARY

According to the cylindrical battery of Patent Literature 1, the shape stability of the winding core portion improves, and an exhaust passage to be used upon occurrence of an abnormality is sufficiently secured. Meanwhile, when a change in the volume of the negative electrode during charging and discharging has increased to a large degree with an increase in the capacity of the battery, for example, deformation of the electrode assembly is likely to occur around the winding core even in the cylindrical battery of Patent Literature 1. When large deformation of the electrode assembly occurs at opposing portions of the positive electrode and the negative electrode, the distance between the positive and negative electrodes will change, with the result that unevenness of the charge-discharge reactions can occur, for example, which is problematic.

The cylindrical battery according to the present disclosure is a cylindrical battery, comprising an electrode assembly, the electrode assembly having a positive electrode and a negative electrode including a core and a mixture layer, and a separator, the positive electrode and the negative electrode being wound with the separator interposed between the positive electrode and the negative electrode, in which the negative electrode has an opposing portion where the mixture layer is formed on both sides of the core, the opposing portion facing the positive electrode with the separator interposed between the opposing portion and the positive electrode, and a non-opposing portion extending toward a winding center of the electrode assembly from a start end of the opposing portion that faces a start end of the positive electrode located on a winding-start side of the electrode assembly with the separator interposed between the start ends on a winding inner side, the non-opposing portion includes a double-sided mixture forming portion where the mixture layer is formed on both sides of the core, the double-sided mixture forming portion being wound 0.75 turn or more from the start end of the opposing portion, and the double-sided mixture forming portion includes a thin-walled portion where a thickness of the mixture layer is smaller than a thickness of the mixture layer of the opposing portion.

With the cylindrical battery according to the present disclosure, it is possible to suppress the deformation of the electrode assembly at the opposing portions of the positive electrode and the negative electrode while securing an exhaust passage upon occurrence of an abnormality.

### BRIEF DESCRIPTION OF DRAWING

FIG. 1 is a sectional view in the axial direction of a cylindrical battery as an example of an embodiment.
FIG. 2 is a view illustrating a partial cross-section in the radial direction of an electrode assembly as an example of an embodiment.
FIG. 3 is a view for describing a method for evaluating deformation of an electrode plate.

### DESCRIPTION OF EMBODIMENTS

Hereinafter, an example of an embodiment of a cylindrical battery according to the present disclosure will be described in detail with reference to the drawings. Note that the cylindrical battery according to the present disclosure is not limited to the embodiment described below.

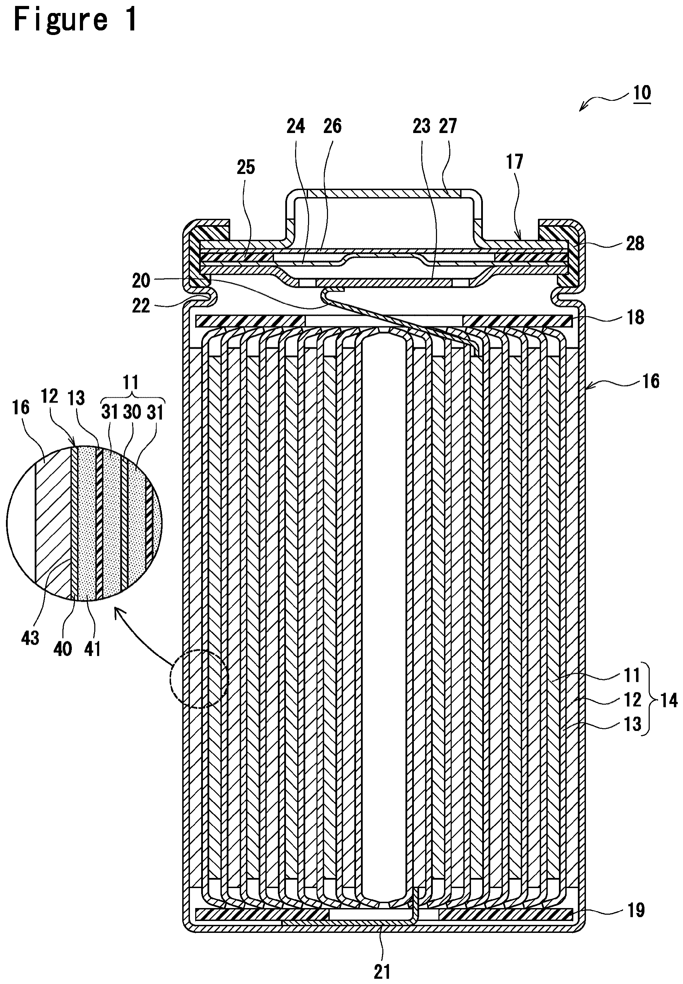

FIG. 1 is a sectional view of a cylindrical battery 10 as an example of an embodiment. As illustrated in FIG. 1, the cylindrical battery 10 comprises an electrode assembly 14 that has a positive electrode 11, a negative electrode 12, and a separator 13, and is formed by winding the positive electrode 11 and the negative electrode 12 with the separator 13 interposed therebetween. The cylindrical battery 10 also comprises a closed-bottomed cylindrical outer can 16 for housing the electrode assembly 14, and a sealing assembly 17 for closing an opening portion of the outer can 16. The outer can 16 houses an electrolyte together with the electrode assembly 14. The outer can 16 has a grooved portion 22 formed in its sidewall, and the sealing assembly 17 closes the opening portion of the outer can 16 while being supported on the grooved portion 22. Hereinafter, the sealing assembly 17 side of the cylindrical battery 10 shall be assumed as the upper side, while the bottom side of the outer can 16 shall be assumed as the lower side for the sake of convenience of description.

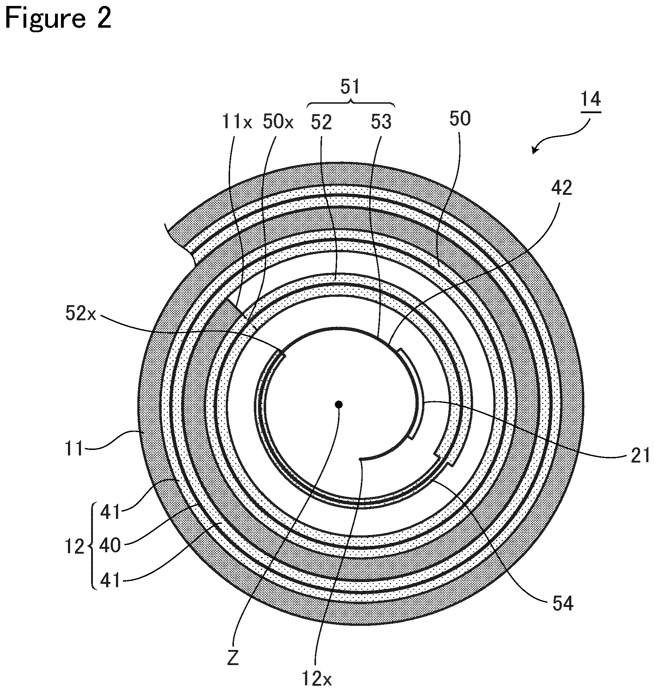

The details will be described later, but the negative electrode 12 has a non-opposing portion 51, which does not face the positive electrode 11, on the winding-start side of the electrode assembly 14, and the non-opposing portion 51 includes a first region 52 as a double-sided mixture forming portion that has a negative electrode core 40 and a negative electrode mixture layer 41 formed on the both sides thereof (see FIG. 2). The first region 52 of the non-opposing portion 51 secures a winding core structure of the electrode assembly 14 with excellent shape stability, and the winding core has a cavity formed therein along the axial direction. The cavity of the winding core functions as an exhaust passage for guiding a gas, which is generated when an abnormality occurs to the battery, toward a safety valve. Setting the length of the first region 52 to greater than or equal to 0.75 turn can stabilize the shape of the winding core, and can secure a sufficient cavity as an exhaust passage.

The electrolyte may be an aqueous electrolyte, but in the present embodiment, a non-aqueous electrolyte is used. The non-aqueous electrolyte has lithium ionic conductivity. The non-aqueous electrolyte may be either a liquid electrolyte (i.e., an electrolytic solution) or a solid electrolyte. The cylindrical battery 10 is a non-aqueous electrolyte secondary battery, for example, and is preferably a lithium-ion battery, in particular.

The liquid electrolyte (i.e., the electrolytic solution) contains a non-aqueous solvent and an electrolyte salt dissolved therein. As the non-aqueous solvent, esters, ethers, nitriles, amides, or a mixed solvent of two or more of them can be used, for example. Examples of the non-aqueous solvent include ethylene carbonate (EC), ethyl methyl carbonate (EMC), dimethyl carbonate (DMC), diethyl carbonate (DEC), and a mixed solvent thereof. The non-aqueous solvent may contain a halogen-substituted compound (e.g., fluoroethylene carbonate) obtained by substituting at least some of hydrogen atoms of such a solvent with halogen atoms, such as fluorine. As the electrolyte salt, a lithium salt, such as LiPF₆, is used, for example.

As the solid electrolyte, a solid or gel-like polymer electrolyte or an inorganic solid electrolyte can be used, for example. As the inorganic solid electrolyte, known materials for all-solid-state lithium-ion secondary batteries (e.g., an oxide-based solid electrolyte, a sulfide-based solid electrolyte, and a halogen-based solid electrolyte) can be used. The polymer electrolyte contains a lithium salt and a matrix polymer, or contains a non-aqueous solvent, a lithium salt, and a matrix polymer, for example. As the matrix polymer, a polymer material that turns into a gel by absorbing a non-aqueous solvent is used, for example. Examples of the polymer material include fluororesin, acrylic resin, and polyether resin.

As described above, the electrode assembly 14 has a wound structure obtained by spirally winding the positive electrode 11 and the negative electrode 12 with the separator 13 interposed therebetween. All of the positive electrode 11, the negative electrode 12, and the separator 13 are long, belt-like bodies, and are spirally wound so as to be alternately stacked in the radial direction of the electrode assembly 14. The negative electrode 12 is formed such that it has larger dimensions than the positive electrode 11 to prevent the deposition of lithium. That is, the negative electrode 12 is formed such that it is longer than the positive electrode 11 both in the longitudinal direction and the width direction. The separator 13 is formed such that it has larger dimensions than at least the positive electrode 11. For example, two separators 13 are arranged to sandwich the positive electrode 11 therebetween.

The electrode assembly 14 has a positive electrode lead 20 joined to the positive electrode 11, and a negative electrode lead 21 joined to the negative electrode 12. In the present embodiment, the positive electrode lead 20 is provided in the central portion in the longitudinal direction of the positive electrode 11, and at a position away from an end of the winding-start side and an end of the winding-finish side of the electrode assembly 14. Meanwhile, the negative electrode lead 21 is provided at one end portion in the longitudinal direction of the negative electrode 12 located on the winding-start side of the electrode assembly 14. The negative electrode 12 has a first core exposed portion 42 (see FIG. 2) corresponding to a portion from the start end 12x, which is one end in the longitudinal direction, of the negative electrode 12 to the non-opposing portion 51, and having no negative electrode mixture layer 41. The negative electrode lead 21 is joined to the core exposed portion 42.

The positive electrode 11 has a positive electrode core 30, and a positive electrode mixture layer 31 formed on at least one surface thereof. As the positive electrode core 30, it is possible to use, for example, foil of metal that is stable in the potential range of the positive electrode 11, such as aluminum or aluminum alloy, or a film having such a metal arranged as a surface layer. The positive electrode mixture layer 31 contains a positive electrode active material; a conductive agent, such as acetylene black; and a binder, such as polyvinylidene fluoride (PVdF), and is preferably formed on the both sides of the positive electrode core 30. The thickness of the positive electrode mixture layer 31 is greater than or equal to 40 µm and less than or equal to 100 µm, for example. As the positive electrode active material, lithium transition metal composite oxide containing Ni, Co, Mn, Al, and the like is used, for example. Note that the positive electrode lead 20 is preferably directly joined to the positive electrode core 30 by ultrasound welding, for example.

The negative electrode 12 has the negative electrode core 40, and the negative electrode mixture layer 41 formed on at least one surface thereof. As the negative electrode core 40, it is possible to use, for example, foil of metal that is stable in the potential range of the negative electrode 12, such as copper or copper alloy, or a film having such a metal arranged as a surface layer. The negative electrode mixture layer 41 contains a negative electrode active material, and a binder, such as styrene-butadiene rubber (SBR), and is preferably formed on the both sides of the negative electrode core 40. The thickness of the negative electrode mixture layer 41 is greater than or equal to 40 µm and less than or equal to 100 µm, for example. As the negative electrode active material, graphite or a Si-containing material is used, for example. The negative electrode lead 21 is preferably directly joined to the negative electrode core 40 by ultrasound welding, for example.

The cylindrical battery 10 comprises an upper insulating plate 18 arranged between the sealing assembly 17 and an electrode group, and having an opening portion for passing the positive electrode lead 20. In this specification, the electrode group means a portion including the positive electrode 11, the negative electrode 12, and the separator 13 of the electrode assembly 14, excluding the positive electrode lead 20 and the negative electrode lead 21. The cylindrical battery 10 comprises a lower insulating plate 19 arranged between the inner surface of the bottom of the outer can 16 and the electrode group, and having an opening portion for passing the negative electrode lead 21.

In the example illustrated in FIG. 1, the positive electrode lead 20 extends toward the sealing assembly 17 through the opening portion of the upper insulating plate 18, while the negative electrode lead 21 extends toward the bottom of the outer can 16 through the opening portion of the lower insulating plate 19. The positive electrode lead 20 is connected to the lower surface of a bottom plate 23 of the sealing assembly 17 by welding, for example, so that the sealing assembly 17 serves as a positive electrode terminal. The negative electrode lead 21 is connected to the inner surface of the bottom of the outer can 16 by welding, for example, so that the outer can 16 serves as a negative electrode terminal.

The outermost peripheral surface of the electrode assembly 14 has the negative electrode 12 arranged thereon, and is provided with a second core exposed portion 43 where the surface of the negative electrode core 40 is exposed. The core exposed portion 43 abuts the inner peripheral surface of the outer can 16. As the core exposed portion 43 abuts the inner peripheral surface of the outer can 16, which serves as the negative electrode terminal, opposite end portions in the longitudinal direction of the negative electrode 12 and the outer can 16 are electrically connected so that excellent current collectability can be secured. The core exposed portion 43 may be provided on a part of the outermost peripheral surface of the electrode assembly 14, but is preferably provided on the entire outermost peripheral surface. For example, there is provided a portion where the negative electrode mixture layer 41 is not provided on the both sides of the negative electrode core 40, over a length of greater than or equal to one turn of the electrode assembly 14 from the winding-finish end of the negative electrode 12.

The outer can 16 is a closed-bottomed cylindrical metal container. A gasket 28 is provided between the outer can 16 and the sealing assembly 17 so that the inside of the battery is hermetically sealed. For example, the outer can 16 has the grooved portion 22 that is formed by pressing the side surface portion of the outer can 16 from its outer side, and is adapted to support the sealing assembly 17. The grooved portion 22 is preferably formed in an annular shape along the circumferential direction of the outer can 16, and the upper surface of the grooved portion 22 supports the sealing assembly 17. In addition, the upper end portion of the outer can 16 is bent inward, and is swaged to the peripheral portion of the sealing assembly 17.

The sealing assembly 17 has a structure in which the bottom plate 23, a lower vent member 24, an insulating member 25, an upper vent member 26, and a cap 27 are stacked in this order from the side of the electrode assembly 14. Each member of the sealing assembly 17 has a disc shape or a ring shape, for example, and members other than the insulating member 25 are electrically connected together. The lower vent member 24 and the upper vent member 26 are connected together at their central portions, and the insulating member 25 is provided between their peripheral portions. With an increase in the internal pressure of the battery, the lower vent member 24 deforms such that it pushes the upper vent member 26 toward the cap 27, and then ruptures, thereby blocking a current path between the lower vent member 24 and the upper vent member 26. With a further increase in the internal pressure, the upper vent member 26 ruptures so that a gas is discharged through an opening portion of the cap 27.

Hereinafter, the configuration of the negative electrode 12 on the winding-start side of the electrode assembly 14 will be described in detail with reference to FIG. 2. FIG. 2 is a sectional view in the radial direction of the winding core of the electrode assembly 14 and its periphery. In FIG. 2, the separator 13 is not illustrated for the purpose of clarification of the drawing. In addition, the positive electrode core 30 and the positive electrode mixture layer 31 are not illustrated, either.

As illustrated in FIG. 2, the negative electrode 12 has an opposing portion 50, which includes the negative electrode core 40 and the negative electrode mixture layer 41 formed on the both sides thereof, and faces the positive electrode 11 with the separator 13 interposed therebetween, and the non-opposing portion 51 extending toward the winding center Z of the electrode assembly 14 while not facing the positive electrode 11 with the separator 13 interposed therebetween. The non-opposing portion 51 extends toward the winding center Z of the electrode assembly 14 from the start end 50x of the opposing portion 50 facing the start end 11x of the positive electrode 11 with the separator 13 interposed therebetween on the winding inner side. As described above, the non-opposing portion 51 includes the first region 52 as a double-sided mixture forming portion that has the negative electrode core 40 and the negative electrode mixture layer 41 formed on the both sides thereof, and is wound 0.75 turn or more from the start end 50x of the opposing portion 50.

The first region 52 of the non-opposing portion 51, which has the negative electrode mixture layer 41 but does not face the positive electrode 11, does not contribute to charging or discharging of the battery. Meanwhile, the first region 52 has high rigidity as it has the negative electrode mixture layer 41, and thus contributes to stabilizing the shape of the winding core portion of the electrode assembly 14, and secures an exhaust passage for a gas generated when an abnormality occurs to the battery.

In this specification, the start end 11x of the positive electrode means one end in the longitudinal direction of the positive electrode 11 located on the winding-start side (i.e., the winding core side) of the electrode assembly 14. Similarly, the start end 12x of the negative electrode means one end in the longitudinal direction of the negative electrode 12 located on the winding-start side of the electrode assembly 14. The start end 12x of the negative electrode is located closer to the winding center Z than is the start end 11x of the positive electrode.

The non-opposing portion 51 is formed in a length of greater than or equal to 0.75 turn from the start end 50x of the opposing portion 50, and in the present embodiment, has a length of greater than or equal to 1.0 turn and less than or equal to 3.0 turns. The first region 52 is formed in a length of at least 0.75 turn from the start end 50x of the opposing portion 50, preferably, greater than or equal to 0.75 turn and less than or equal to 1.5 turn, more preferably, greater than or equal to 0.9 turn and less than or equal to 1.5 turn, and particularly preferably, greater than or equal to 1.0 turn and less than or equal to 1.3 turn. In such a case, it is possible to easily secure an excellent exhaust passage in the winding core portion while suppressing the deformation of the electrode plate.

The non-opposing portion 51 includes the first region 52 and a second region 53 where at least one side of the negative electrode core 40 is exposed. The second region 53 may have the negative electrode mixture layer 41 on one side of the negative electrode core 40, but in the present embodiment, the second region 53 corresponds to the first core exposed portion 42 where the both sides of the negative electrode core 40 are exposed. The non-opposing portion 51 includes the second region 53, which is the core exposed portion, between the start end 52x of the first region 52 located on the winding-start side of the electrode assembly 14 and the start end 12x of the negative electrode 12.

The non-opposing portion 51 is considered to contribute to stabilizing the shape of the winding core portion as well as suppressing the deformation of the electrode plate by relaxing stress generated due to the expansion and shrinkage of the electrode assembly 14 during charging and discharging. In the present embodiment, the negative electrode lead 21 is joined to the second region 53 of the non-opposing portion 51. When the negative electrode lead 21 is joined to the winding core portion of the electrode assembly 14, the second region 53 is restrained in the outer can 16. Thus, deformation of the electrode plate is likely to occur at the opposing portions of the positive and negative electrodes during charging and discharging. However, according to the present embodiment, introducing a thin-walled portion 54 into the first region 52 of the non-opposing portion 51 can effectively suppress the deformation of the electrode plate.

Note that the length of the second region 53 is not limited to a particular length, but is preferably greater than or equal to 0.5 turn from the perspective of securing the joint area of the negative electrode lead 21. The negative electrode lead 21 is a thin metal plate mainly composed of metal, such as nickel, for example, and has a thickness of greater than or equal to 50 µm and less than or equal to 100 µm. The negative electrode lead 21 is joined to the outer surface of the second region 53 facing the outer side of the electrode assembly 14 at a position away from the start end 12x of the negative electrode 12 and from the first region 52, for example.

As described above, the first region 52 of the non-opposing portion 51 is a portion where the negative electrode mixture layer 41 is formed on the both sides of the negative electrode core 40. The first region 52 is formed in a length of greater than or equal to 0.75 turn from the start end 50x of the opposing portion 50 toward the start end 12x of the negative electrode 12, and at least partially includes the thin-walled portion 54 where the thickness of the negative electrode mixture layer 41 is smaller than that of the negative electrode mixture layer 41 of the opposing portion 50. Introducing the thin-walled portion 54 can effectively suppress the deformation of the electrode plate while maintaining the stability of the shape of the winding core portion.

The thin-walled portion 54 is preferably formed in a region from the start end 52x of the first region 52 to the winding-finish side. That is, the thin-walled portion 54 is formed in a predetermined length range of the first region 52 adjacent to the second region 53. In such a case, the effect of suppressing the deformation of the electrode plate will increase, and the production of the negative electrode 12 becomes easy. The thin-walled portion 54 may be formed over the entire length of the first region 52, but is preferably not formed around the start end 11x of the positive electrode 11 from the perspective of suppressing the deposition of lithium, for example.

The thin-walled portion 54 is formed in a length of greater than or equal to 10% and less than or equal to 90% of the length of the first region 52 (i.e., the length along the longitudinal direction of the negative electrode 12) from the start end 52x of the first region 52, for example. If the length of the thin-walled portion 54 is in such a range, it is possible to effectively secure an exhaust passage in the winding core and suppress the deformation of the electrode plate.

The length of the thin-walled portion 54 is preferably greater than or equal to 20% and less than or equal to 80% of the length of the first region 52, more preferably, greater than or equal to 30% and less than or equal to 70%, and particularly preferably, greater than or equal to 40% and less than or equal to 60%. If the length of the thin-walled portion 54 is in such a range, the advantageous effects obtained with the introduction of the thin-walled portion 54 become more significant. Note that the thin-walled portion 54 may be formed intermittently along the longitudinal direction of the negative electrode 12, but is preferably formed continuously.

The thickness of the negative electrode mixture layer 41 of the thin-walled portion 54 is greater than or equal to 10% and less than or equal to 90% of the thickness of the negative electrode mixture layer 41 of the opposing portion 50, for example. If the thickness of the thin-walled portion 54 is in such a range, it is possible to effectively secure an exhaust passage in the winding core and suppress the deformation of the electrode plate. It is acceptable as long as the thin-walled portion 54 has a structure such that the total thickness of the negative electrode mixture layer 41 formed on each side of the negative electrode core 40 is smaller than that of the opposing portion 50. The thickness of the negative electrode mixture layer 41 on each side may be different, but is the same in the present embodiment.

The thickness of the negative electrode mixture layer 41 of the thin-walled portion 54 is preferably greater than or equal to 20% and less than or equal to 80% of the thickness of the negative electrode mixture layer 41 of the opposing portion 50, more preferably, greater than or equal to 30% and less than or equal to 70%, and particularly preferably, greater than or equal to 40% and less than or equal to 60%. If the thickness of the thin-walled portion 54 is in such a range, the advantageous effects obtained with the introduction of the thin-walled portion 54 become more significant. Note that the thickness of the negative electrode mixture layer 41 of the thin-walled portion 54 may vary in the longitudinal direction or the width direction of the negative electrode 12, but is substantially the same across the entire region of the thin-walled portion 54 in the present embodiment.

At least a part of the thin-walled portion 54 is preferably formed in the range of less than or equal to 1.0 turn from the start end 50x of the opposing portion 50. In such a case, the advantageous effects obtained with the introduction of the thin-walled portion 54 become more significant. If the length of the first region 52 is less than or equal to 1.0 turn, it follows that the entire thin-walled portion 54 is formed in such a range. Meanwhile, if the length of the first region 52 is over 1.0 turn, it is preferable to adjust the length of the thin-walled portion 54 such that a part of the thin-walled portion 54 is formed in the range of less than or equal to 1.0 turn.

### EXAMPLES

Hereinafter, the present disclosure will be further described by way of Examples, but the present disclosure is not limited thereto.

### <Example 1>

### [Fabrication of Positive Electrode]

As a positive electrode active material, lithium nickel oxide containing cobalt and aluminum (LiNi_{0.88}Co_{0.09}Al_{0.03}O₂) was used. A positive electrode mixture slurry was prepared by mixing the positive electrode active material, acetylene black, and polyvinylidene fluoride at a solid content mass ratio of 98:1:1, and by using N-methylpyrrolidone (NMP) as a dispersion medium. The slurry was applied to the both sides of a positive electrode core made of long aluminum foil with a thickness of 15 µm, and then, the coating was dried and compressed to obtain a positive electrode having a positive electrode mixture layer (the thickness on each side: 90 µm, and the density: 3.6 g/cm³) formed on the both sides of the positive electrode core. Note that the central portion in the longitudinal direction of the positive electrode was provided with a core exposed portion having no positive electrode mixture layer, and a positive electrode lead made of aluminum was ultrasonic-welded to the exposed portion.

### [Fabrication of Negative Electrode]

As a negative electrode active material, a mixed material containing graphite powder and a Si-containing material at a mass ratio of 95:5 was used. A negative electrode mixture slurry was prepared by mixing the negative electrode active material, dispersion of styrene butadiene rubber, and carboxymethylcellulose sodium at a solid content mass ratio of 98:1:1, and by using water as a dispersion medium. The negative electrode mixture slurry was applied to regions of the both sides of a negative electrode core, which is made of long copper foil with a thickness of 8 µm, excluding an exposed portion of the negative electrode core described below, and then, the coating was dried and compressed to obtain a negative electrode having the negative electrode core and a negative electrode mixture layer formed on the both sides thereof.

The thickness of the negative electrode mixture layer, excluding that for a thin-walled portion described below, was set to 188 µm (the thickness on each side: 94 µm, and the density: 1.6 g/cm³). A non-opposing portion of the negative electrode extending from the start end of an opposing portion of the negative electrode toward the winding center was also provided with a double-sided mixture forming portion (i.e., a first region) where a negative electrode mixture layer is formed on the both sides of the negative electrode core, across a length of 1 turn (12.6 mm) from the start end of the opposing portion.

Regions of a predetermined length of the negative electrode from its opposite ends in the longitudinal direction were respectively provided with first and second core exposed portions having no negative electrode mixture layer, and a negative electrode lead made of nickel was ultrasonic-welded to the first core exposed portion. A region of a predetermined length adjacent to the first core exposed portion having the negative electrode lead joined thereto was provided with a thin-walled portion where the thickness of the negative electrode mixture layer is smaller than that of the other portions. The thin-walled portion was formed by applying a smaller amount of negative electrode mixture slurry than in the other portions, and the thickness of the negative electrode mixture layer of the thin-walled portion was set to 94 µm (the thickness on each side: 47 µm, and the density: 1.6 g/cm³). The length of the thin-walled portion from the start end of the first region was set to 6.3 mm. Such a length corresponds to 50% of the length of the first region.

### [Fabrication of Electrode Assembly]

A wound electrode assembly was obtained by spirally winding the foregoing positive electrode, the foregoing negative electrode, and a separator made of polyethylene using a cylindrical winding core member, and attaching fixing tape to the opposite end portions in the axial direction of the outermost peripheral surface. At this time, the negative electrode was arranged to allow the first core exposed portion, which has the negative electrode lead joined thereto, to be located on the winding-start side of the electrode assembly. That is, the second core exposed portion of the negative electrode is located on the winding-finish side of the electrode assembly. In addition, the negative electrode was caused to extend from the start end of the opposing portion, which faces the start end of the positive electrode on the winding-start side of the electrode assembly with the separator interposed therebetween on the winding inner side, so that a non-opposing portion not facing the positive electrode was provided. As described above, the non-opposing portion includes the first region where the negative electrode mixture layer is formed on the both sides of the negative electrode core, over a length of 1 turn form the start end of the opposing portion, and 50% of such a length corresponds to the thin-walled portion. After the wound structure of the electrode assembly was formed, the winding core member was removed to obtain a wound electrode assembly having a cavity formed in its winding core portion.

### [Preparation of Non-Aqueous Electrolytic Solution]

A non-aqueous electrolytic solution was prepared by adding 5 parts by mass of vinylene carbonate (VC) into 100 parts by mass of a mixed solvent containing a mixture of ethylene carbonate (EC) and dimethyl carbonate (DMC) at a volume ratio of 1:3 (25°C), and then dissolving 1.5 mol/liter of LiPF₆ therein.

### [Fabrication of Cylindrical Battery]

Insulating plates were arranged above and below the foregoing electrode assembly, and then, a negative electrode lead was welded to the inner surface of the bottom of a closed-bottomed cylindrical outer can. Then, a positive electrode lead was welded to an internal terminal board of a sealing assembly, and the electrode assembly was housed within the outer can. After that, a non-aqueous electrolytic solution was injected into the outer can using a decompression method, and then, an opening portion of the outer can was sealed with the sealing assembly via a gasket so that a cylindrical battery was obtained. Note that a second core exposed portion of the negative electrode forms the outermost peripheral surface of the electrode assembly, and is in contact with the inner peripheral surface of the outer can.

### <Example 2>

A cylindrical battery was fabricated in a manner similar to Example 1 except a point that the thickness of the negative electrode mixture layer of the thin-walled portion was changed to be 85% of the thickness of the negative electrode mixture layer of the opposing portion.

### <Example 3>

A cylindrical battery was fabricated in a manner similar to Example 1 except points that the length of the first region was changed to 1.5 turn, the length of the thin-walled portion was changed to be 87% of the length of the first region, and the thickness of the negative electrode mixture layer of the thin-walled portion was changed to be 80% of the thickness of the negative electrode mixture layer of the opposing portion.

### <Example 4>

A cylindrical battery was fabricated in a manner similar to Example 1 except a point that the length of the thin-walled portion was changed to be 15% of the length of the first region.

### <Comparative Example 1>

A cylindrical battery was fabricated in a manner similar to Example 1 except points that no thin-walled portion was provided, and the thickness of the negative electrode mixture layer of the entire first region was set the same as the thickness of the negative electrode mixture layer of the opposing portion.

### [Evaluation of Deformation of Electrode plate (i.e., Presence or Absence of Buckling)]

Each of the batteries of the experimental examples was charged under a temperature environment of 45°C and with a constant current of 0.5 C until a battery voltage of 4.2 V was reached. After that, each battery was discharged with a constant current of 0.7 C until a battery voltage of 2.5 V was reached. After 500 cycles of such charging and discharging, the battery was set to the charged state, and then, a region around the winding core of the electrode assembly was observed with an X-ray CT system (SMX-225CT FPD HR manufactured by SHIMADZU CORPORATION).

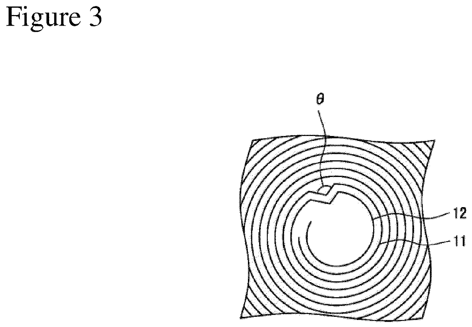

As shown in FIG. 3, regarding the opposing portions of the positive electrode and the negative electrode, the presence or absence of buckling was evaluated by determining that buckling is present when deformation (i.e., buckling) with an angle θ of less than or equal to 150° is confirmed in an electrode plate (i.e., at least one of the positive electrode 11 and the negative electrode 12). Evaluation was performed for 100 batteries.

**[Table 1]**

| | Length of First Region | Length of Thin-Walled Portion / Length of First Region | Thickness of Thin-Walled Portion / Thickness of Opposing Portion | The Number of Times of Buckling |
|---|---|---|---|---|
| Example 1 | 1.0 Turn | 50% | 50% | 0/100 |
| Example 2 | 1.0 Turn | 50% | 85% | 1/100 |
| Example 3 | 1.5 Turn | 87% | 80% | 2/100 |
| Example 4 | 1.0 Turn | 15% | 50% | 5/100 |
| Comparative Example 1 | 1.0 Turn | - | - | 15/100 |

As shown in Table 1, each of the batteries of Examples 1 to 4 is less likely to undergo buckling of the electrode assembly in comparison with the battery of Comparative Example 1. Proving the first region, which is the double-sided mixture forming portion, in the non-opposing portion of the negative electrode can increase the stability of the shape of the winding core portion, and sufficiently secure an exhaust passage upon occurrence of an abnormality. However, as is obvious from the results of Comparative Example 1, deformation of an electrode plate is likely to occur in such a case. It is considered that stress generated due to the expansion and shrinkage of the electrode assembly during charging and discharging is absorbed by the winding core portion of the electrode assembly, which in turn suppresses the deformation of the electrode plate. However, it is supposed that introducing the double-sided mixture forming portion has increased the rigidity of the winding core portion, with the result that stress cannot be sufficiently relaxed, leading to deformation of the electrode plate. As a result of the study conducted by the inventors, it has been found that providing a double-sided mixture forming portion with a thin-walled portion as in the batteries of the Examples can effectively suppress the deformation of the electrode plate while ensuring the stability of the shape of the winding core portion.

The present disclosure will be further described by way of the following embodiments.

Configuration 1: A cylindrical battery, comprising an electrode assembly, the electrode assembly having a positive electrode and a negative electrode including a core and a mixture layer, and a separator, the positive electrode and the negative electrode being wound with the separator interposed between the positive electrode and the negative electrode, in which the negative electrode has an opposing portion where the mixture layer is formed on both sides of the core, the opposing portion facing the positive electrode with the separator interposed between the opposing portion and the positive electrode, and a non-opposing portion extending toward a winding center of the electrode assembly from a start end of the opposing portion that faces a start end of the positive electrode located on a winding-start side of the electrode assembly with the separator interposed between the start ends on a winding inner side, the non-opposing portion includes a double-sided mixture forming portion where the mixture layer is formed on both sides of the core, the double-sided mixture forming portion being wound 0.75 turn or more from the start end of the opposing portion, and the double-sided mixture forming portion includes a thin-walled portion where a thickness of the mixture layer is smaller than a thickness of the mixture layer of the opposing portion.

Configuration 2: The cylindrical battery according to Configuration 1, in which the thin-walled portion is formed in a length of greater than or equal to 20% and less than or equal to 80% of a length of the double-sided mixture forming portion from a start end of the double-sided mixture forming portion.

Configuration 3: The cylindrical battery according to Configuration 1 or 2, in which the thickness of the mixture layer of the thin-walled portion is greater than or equal to 40% and less than or equal to 80% of the thickness of the mixture layer of the opposing portion.

Configuration 4: The cylindrical battery according to any one of Configurations 1 to 3, in which the double-sided mixture forming portion has a length of greater than or equal to 0.75 turn and less than or equal to 1.5 turn, and at least a part of the thin-walled portion is formed in a range of less than or equal to 1.0 turn from the start end of the opposing portion.

Configuration 5: The cylindrical battery according to any one of Configurations 1 to 4, in which the electrode assembly has a negative electrode lead, the non-opposing portion includes a core exposed portion where at least one side of the core is exposed, between the start end of the double-sided mixture forming portion and a start end of the negative electrode, and the negative electrode lead is joined to the core exposed portion.

### REFERENCE SIGNS LIST

10 Cylindrical battery, 11 Positive electrode, 11x Start end of positive electrode, 12 Negative electrode, 12x Start end of negative electrode, 13 Separator, 14 Electrode assembly, 16 Outer can, 17 Sealing assembly, 18 Upper insulating plate, 19 Lower insulating plate, 20 Positive electrode lead, 21 Negative electrode lead, 22 Grooved portion, 23 Bottom plate, 24 Lower vent member, 25 Insulating member, 26 Upper vent member, 27 Cap, 28 Gasket, 30 Positive electrode core, 31 Positive electrode mixture layer, 40 Negative electrode core, 41 Negative electrode mixture layer, 42, 43 Core exposed portion, 50 Opposing portion, 50x Start end of opposing portion, 51 Non-opposing portion, 52 First region, 52x Start end of first region, 53 Second region, 54 Thin-walled portion

## Claims

1. A cylindrical battery, comprising:
an electrode assembly, the electrode assembly having a positive electrode, a negative electrode including a core and a mixture layer, and a separator, the positive electrode and the negative electrode being wound with the separator interposed between the positive electrode and the negative electrode, wherein
the negative electrode has
an opposing portion where the mixture layer is formed on both sides of the core, the opposing portion facing the positive electrode with the separator interposed between the opposing portion and the positive electrode, and
a non-opposing portion extending toward a winding center of the electrode assembly from a start end of the opposing portion that faces a start end of the positive electrode located on a winding-start side of the electrode assembly with the separator interposed between the start ends on a winding inner side,
the non-opposing portion includes a double-sided mixture forming portion where the mixture layer is formed on both sides of the core, the double-sided mixture forming portion being wound 0.75 turn or more from the start end of the opposing portion, and
the double-sided mixture forming portion includes a thin-walled portion where a thickness of the mixture layer is smaller than a thickness of the mixture layer of the opposing portion.

2. The cylindrical battery according to claim 1, wherein the thin-walled portion is formed in a length of greater than or equal to 20% and less than or equal to 80% of a length of the double-sided mixture forming portion from a start end of the double-sided mixture forming portion.

3. The cylindrical battery according to claim 1, wherein the thickness of the mixture layer of the thin-walled portion is greater than or equal to 20% and less than or equal to 80% of the thickness of the mixture layer of the opposing portion.

4. The cylindrical battery according to claim 1, wherein
the double-sided mixture forming portion has a length of greater than or equal to 0.75 turn and less than or equal to 1.5 turn, and
at least a part of the thin-walled portion is formed in a range of less than or equal to 1.0 turn from the start end of the opposing portion.

5. The cylindrical battery according to any one of claims 1 to 4, wherein
the electrode assembly has a negative electrode lead,
the non-opposing portion includes a core exposed portion where at least one side of the core is exposed, between the start end of the double-sided mixture forming portion and a start end of the negative electrode, and
the negative electrode lead is joined to the core exposed portion.
